(19) Europäisches Patentamt
European Patent Office
Office européen des brevets

(11) **EP 3 275 104 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **16711613.6**

(22) Anmeldetag: **22.03.2016**

(51) Int Cl.:
**H04L 1/02** *(2006.01)*    **H04L 1/04** *(2006.01)*

(86) Internationale Anmeldenummer:
**PCT/EP2016/056241**

(87) Internationale Veröffentlichungsnummer:
**WO 2016/156109 (06.10.2016 Gazette 2016/40)**

(54) **VERFAHREN ZUR DRAHTLOSEN DATENÜBERTRAGUNG ÜBER ZWEI DRAHTLOS-DATENÜBERTRAGUNGSKANÄLE SOWIE DATENÜBERTRAGUNGSEINRICHTUNG**

METHOD FOR WIRELESS DATA TRANSMISSION VIA TWO WIRELESS DATA TRANSMISSION CHANNELS AND DATA TRANSMISSION DEVICE

PROCÉDÉ DE TRANSMISSION DE DONNÉES SANS FIL VIA DEUX CANAUX DE TRANSMISSION DE DONNÉES SANS FIL ET DISPOSITIF DE TRANSMISSION DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2015 DE 102015104775**

(43) Veröffentlichungstag der Anmeldung:
**31.01.2018 Patentblatt 2018/05**

(73) Patentinhaber: **Technische Universität Braunschweig**
**38106 Braunschweig (DE)**

(72) Erfinder:
• **KÜRNER, Thomas**
**38518 Gifhorn (DE)**
• **CHEN, Xiaomin**
**20149 Hamburg (DE)**
• **JUKAN, Admela**
**38114 Braunschweig (DE)**

(74) Vertreter: **Gramm, Lins & Partner Patent- und Rechtsanwälte PartGmbB**
**Freundallee 13a**
**30173 Hannover (DE)**

(56) Entgegenhaltungen:
WO-A1-02/32020      DE-A1-102010 018 749
US-A1- 2003 200 499   US-A1- 2013 201 886

• **BEI YIN ET AL: "Low complexity opportunistic decoder for network coding", ASILOMAR CONFERENCE ON SIGNALS, SYSTEMS AND COMPUTERS. CONFERENCE RECORD, IEEE COMPUTER SOCIETY, US, 4. November 2012 (2012-11-04), Seiten 1097-1101, XP032351054, ISSN: 1058-6393, DOI: 10.1109/ACSSC.2012.6489189 ISBN: 978-1-4673-5050-1**
• **PENG BILE ET AL: "Fast beam searching concept for indoor Terahertz communications", THE 8TH EUROPEAN CONFERENCE ON ANTENNAS AND PROPAGATION (EUCAP 2014), EUROPEAN ASSOCIATION ON ANTENNAS AND PROPAGATION, 6 April 2014 (2014-04-06), pages 639-643, XP032642669, DOI: 10.1109/EUCAP.2014.6901840 [retrieved on 2014-09-17]**

EP 3 275 104 B1

**Beschreibung**

Die Erfindung betrifft ein Verfahren zur drahtlosen Datenübertragung zwischen einem Sender und einem Empfänger, zwischen denen ein erster Drahtlos-Datenübertragungskanal und ein zweiter Drahtlos-Datenübertragungskanal gebildet ist, wobei der erste Drahtlos-Datenübertragungskanal ein Hochgeschwindigkeits-Datenübertragungskanal ist, der eine wesentlich höhere Datenübertragungsrate als der zweite Drahtlos-Datenübertragungskanal aufweist. Die Erfindung betrifft außerdem eine Datenübertragungseinrichtung mit einem Sender und einem Empfänger, zwischen denen ein erster Drahtlos-Datenübertragungskanal und ein zweiter Drahtlos-Datenübertragungskanal gebildet ist, über die Datenpakete übertragbar sind.

Allgemein können bei einer Datenübertragung Übertragungsfehler auftreten. Hierfür gibt es Fehlererkennungs- und Fehlerkorrekturmechanismen, zum Beispiel unter Verwendung einer redundanten Kodierung der Daten. Bei einer drahtlosen Datenübertragung können viele äußere Einflüsse für eine Verschlechterung der Übertragungsqualität und damit zu einer erhöhten Fehlerhäufigkeit führen. Insbesondere im Bereich der Hochgeschwindigkeits-Datenübertragung bei Nutzung hoher Übertragungsfrequenzen, zum Beispiel im Terahertz-Bereich, können schon kleine Veränderungen in der Umgebung der Übertragungsstrecke einen großen Einfluss auf die Übertragungsqualität und damit auf die Fehlerrate haben. So verspricht die Drahtlos-Datenübertragung im Terahertz-Bereich viele Fortschritte, dennoch sind viele Probleme noch nicht zufriedenstellend gelöst, zum Beispiel bei Anwendung einer solchen Datenübertragung in Gebäuden oder in einzelnen Räumen. Gerade bei kurzen Distanzen von wenigen Metern oder innerhalb eines Raumes können verschiedene Datenübertragungsprobleme auftreten, wie Dämpfungsverluste infolge von Abschattungseffekten, Mehrwegeausbreitung oder Interferenzen.

Die auftretenden Probleme lassen sich zum Teil reduzieren, indem zum Beispiel die Sendeleistung erhöht wird oder spezielle, relativ aufwendige Antennen eingesetzt werden. Die erstgenannte Lösung ist in energetischer Hinsicht nicht optimal, die letztgenannte Lösung ist kosten- und platzaufwendig.

Aus der DE 10 2010 018 749 A1 ist ein hybrides Datenübertragungsverfahren für drahtlose Kommunikation bekannt. Aus der WO 02/32020 A1 ist ein hybrides drahtloses Kommunikationssystem bekannt, das eine Kombination von optischen und nicht optischen Kanälen nutzt. Aus der US 2013/0201886 A1 ist ein Rate Matching-Verfahren für ein drahtloses Kommunikationssystem bekannt. Aus der US 2003/0200499 A1 ist ein Verfahren einer Vielfachübertragung über Drahtlosnetzwerke bekannt.

Der Erfindung liegt die Aufgabe zugrunde, ein Verfahren zur drahtlosen Datenübertragung anzugeben, das die erwähnten Probleme mit möglichst geringem Aufwand löst. Ferner soll eine geeignete Datenübertragungseinrichtung sowie ein entsprechendes Computerprogrammprodukt angegeben werden.

Diese Aufgabe wird gelöst durch ein Verfahren gemäß Anspruch 1. Das Verfahren beinhaltet eine drahtlose Datenübertragung zwischen einem Sender und einem Empfänger, zwischen denen ein erster Drahtlos-Datenübertragungskanal und ein zweiter Drahtlos-Datenübertragungskanal gebildet ist, wobei der erste Drahtlos-Datenübertragungskanal ein Hochgeschwindigkeits-Datenübertragungskanal ist, der eine wesentlich höhere Datenübertragungsrate als der zweite Drahtlos-Datenübertragungskanal aufweist, mit folgenden Schritten:

a) vom Sender zu übertragende Datenpakete werden in Generationen von Datenpaketen eingeteilt, wobei eine Generation K Datenpakete aufweist,
b) die K Datenpakete einer Generation werden über eine Kodierung mit einer Redundanz versehen, indem sie in N Datenpakete umkodiert werden, wobei N > K ist,
c) die N umkodierten Datenpakete der Generation werden vom Sender zum Empfänger übertragen, indem sie paketweise auf den ersten und den zweiten Drahtlos-Datenübertragungskanal verteilt übertragen werden,
d) aus den über den ersten und den zweiten Drahtlos-Datenübertragungskanal im Empfänger korrekt empfangenen Datenpaketen werden die ursprünglichen K Datenpakete der Generation dekodiert.

Die Erfindung hat den Vorteil, dass die Qualität der Datenübertragung, das heißt die Robustheit gegenüber Übertragungsfehlern, mit vergleichsweise geringem Aufwand deutlich verbessert werden kann. Durch Nutzung wenigstens zweier Drahtlos-Datenübertragungskanäle mit unterschiedlichen Übertragungseigenschaften, insbesondere unterschiedlicher spezifischer Datenübertragungsrate, kann eine Kanal-Diversität eingeführt werden. Durch besonders vorteilhafte Kodierung der Datenpakete können die verfügbaren Ressourcen in Form der zwei Drahtlos-Datenübertragungskanäle besonders günstig genutzt werden, um eine Datenübertragung mit geringer Fehlerrate und damit mit hohem Datendurchsatz zu erzielen. Bei bestimmten Datenübertragungseinrichtungen sind der Sender und der Empfänger ohnehin bereits derart ausgebildet, dass ein erster Drahtlos-Datenübertragungskanal in Form eines Hochgeschwindigkeits-Datenübertragungskanals vorhanden ist, sowie ein zweiter Drahtlos-Datenübertragungskanal mit geringerer Datenübertragungsrate, der zum Beispiel für Steuer- und Kontrollfunktionen zwischen dem Sender und dem Empfänger genutzt werden kann, zum Beispiel für eine Antennenausrichtung oder Antennenabstimmung am Sender und/oder am Empfänger.

Die Erfindung hat den weiteren Vorteil, dass zur Realisierung des ersten und des zweiten Drahtlos-Datenübertragungskanals keine vollständige Duplizierung der Ressourcen erforderlich ist. Insbesondere sind keine zwei Hochgeschwindigkeits-Datenübertragungskanäle erforderlich. Es ist auch kein Umschalten zwischen einem Hauptdatenübertragungskanal und einem Ersatzdatenübertragungskanal im Fall eines Fehlers notwendig, so dass keine Unterbrechung der Übertragung auftreten kann. Insgesamt bietet die Erfindung eine sehr kosteneffektive und höchst zuverlässige Verbesserung bei einer drahtlosen Datenübertragung.

Soweit vorliegend von einem Sender beziehungsweise einem Empfänger gesprochen wird, so kann es sich hierbei auch um sogenannte Transceiver handeln, bei denen sowohl eine Sende- als auch eine Empfangsfunktion implementiert ist. Dementsprechend kann der erste Drahtlos-Datenübertragungskanal und/oder der zweite Drahtlos-Datenübertragungskanal als unidirektionaler Übertragungskanal oder als bidirektionaler Übertragungskanal ausgebildet sein.

Wie erwähnt, werden die K Datenpakete einer Generation in N Datenpakete umkodiert. Hierbei ist N > K. N und K sind jeweils natürliche Zahlen. Dementsprechend ist in den umkodierten Datenpaketen der Generation eine Redundanz von N - K Datenpaketen vorhanden. Solange im Empfänger wenigstens K umkodierte Datenpakete der insgesamt N umkodierten Datenpakete fehlerfrei empfangen werden, ist eine vollständige und fehlerfreie Dekodierung der ursprünglichen K Datenpakete der Generation möglich. Aus Aufwandsgründen wird die Redundanz im Regelfall nicht zu groß gewählt. Es ist zum Beispiel vorteilhaft, den Wert von N nicht größer als das 1,5-fache oder das 2-fache von K zu wählen. Selbstverständlich hängt die Festlegung von N und K von der Art und Qualität der Drahtlos-Datenübertragungskanäle im jeweiligen Fall ab, so dass auch andere Parameterkombinationen im Einzelfall sinnvoll sein können.

Beim Dekodieren der ursprünglichen K Datenpakete der Generation aus den über den ersten und den zweiten Drahtlos-Datenübertragungskanal im Empfänger korrekt empfangenen Datenpaketen können alle im Empfänger korrekt empfangenen Datenpakete oder nur ein Teil dieser Datenpakete verwendet werden. Insbesondere wenn mehr Datenpakete im Empfänger korrekt empfangen werden als für eine vollständige Dekodierung erforderlich sind, kann aus Aufwandsgründen nur ein Teil davon für die Dekodierung verwendet werden.

Gemäß einer vorteilhaften Weiterbildung der Erfindung wird von den N umkodierten Datenpaketen der Generation eine kleinere Anzahl von Datenpaketen über den zweiten Drahtlos-Datenübertragungskanal übertragen als über den ersten Drahtlos-Datenübertragungskanal. Dies hat den Vorteil, dass den jeweiligen Übertragungskapazitäten der Drahtlos-Datenübertragungskanäle (Hochgeschwindigkeit / nicht Hochgeschwindigkeit) durch eine geeignete Verteilung der zu übertragenden Datenpakete Rechnung getragen wird. So kann zum Beispiel die Verteilung der Datenpakete umgekehrt proportional zum Verhältnis der Übertragungsraten des ersten und des zweiten Drahtlos-Datenübertragungskanals festgelegt werden.

Gemäß einer vorteilhaften Weiterbildung der Erfindung wird die Kodierung der K Datenpakete der Generation mittels einer linearen Netzwerkkodierung (Linear Network Coding - LNC) durchgeführt. Dies hat den Vorteil, dass auf einfache und wenig rechenintensive Weise eine sichere, fehlerkorrigierbare Kodierung der Daten durchgeführt werden kann. Wegen des geringen Rechenaufwands können hierfür auch einfache, und kostengünstige Rechner eingesetzt werden.

Gemäß einer vorteilhaften Weiterbildung der Erfindung wird die Dekodierung der korrekt empfangenen Datenpakete zu den ursprünglichen K Datenpakten durch Lösen eines linearen Gleichungssystems durchgeführt. Auch diese Art der Dekodierung kann einfach und kostengünstig implementiert werden.

Gemäß einer vorteilhaften Weiterbildung der Erfindung weist der erste Drahtlos-Datenübertragungskanal eine Übertragungsfrequenz im Terahertz-Frequenzbereich und der zweite Drahtlos-Datenübertragungskanal eine Übertragungsfrequenz unterhalb des Terahertz-Frequenzbereichs auf. Als Terahertz-Frequenzbereich wird hierbei insbesondere der Bereich von 0,1 bis 10 Terahertz verstanden, oder von 0,3 bis 3 Terahertz. Der zweite Drahtlos-Datenübertragungskanal kann zum Beispiel eine Übertragungsfrequenz im Megahertz- oder Gigahertz-Bereich aufweisen, zum Beispiel im Bereich von 1 Megahertz bis 100 Gigahertz, oder von 100 Megahertz bis 100 Gigahertz.

Gemäß der Erfindung wird der zweite Drahtlos-Datenübertragungskanal zusätzlich für interne Steuer- und Kontrollfunktionen zwischen dem Sender und dem Empfänger genutzt, wobei hierzu Steuer- und/oder Kontroll-Daten über den zweiten Drahtlos-Datenübertragungskanal übertragen werden.

Gemäß einer vorteilhaften Weiterbildung der Erfindung werden über den ersten Drahtlos-Datenübertragungskanal von den N umkodierten Datenpaketen der Generation K Datenpakete übertragen. Dies hat sich für viele Anwendungen der Datenübertragung im Terahertz-Frequenzbereich, insbesondere in Gebäuden, als günstiger Kompromiss zur Erreichung eines hohen Datendurchsatzes bei geringer Fehlerrate herausgestellt.

Gemäß einer vorteilhaften Weiterbildung der Erfindung ist die Übertragung der Datenpakete der Generation über den ersten Drahtlos-Datenübertragungskanal abgeschlossen, bevor oder wenn die Datenübertragung der Datenpakete dieser Generation über den zweiten Drahtlos-Datenübertragungskanal abgeschlossen ist. Auf diese Weise wird ein vorteilhaftes Timing der Datenübertragung, das heißt eine Synchronisation zwischen den zwei Drahtlos-Datenübertragungskanälen gewährleistet. Mittels dieser Synchronisation wird die Datenpufferung auf der Empfängerseite vereinfacht. Es ist hierdurch sichergestellt, dass empfängerseitig nicht nach dem Empfang der Datenpakete vom zweiten Drahtlos-Datenübertragungskanal gewartet werden muss, bis die Datenpakete über den an sich schnelleren ersten Drahtlos-Datenübertragungskanal vollständig übertragen worden sind.

Die eingangs genannte Aufgabe wird außerdem gelöst durch eine Datenübertragungseinrichtung gemäß Anspruch 7. Mit einer solchen Datenübertragungseinrichtung lassen sich ebenfalls die zuvor erläuterten Vorteile realisieren.

Die Datenübertragungseinrichtung ist eine Indoor-Datenübertragungseinrichtung, das heißt eine Datenübertragungseinrichtung für die Datenübertragung in Gebäuden oder in einzelnen Räumen eines Gebäudes. So kann die Datenübertragungseinrichtung als Kurzstrecken-Datenübertragungseinrichtung mit einer Reichweite von weniger als 100 Metern ausgebildet sein, insbesondere mit weniger als 10 Metern oder weniger als einem Meter.

Die eingangs genannte Aufgabe wird außerdem gelöst durch ein Computerprogrammprodukt gemäß Anspruch 9.

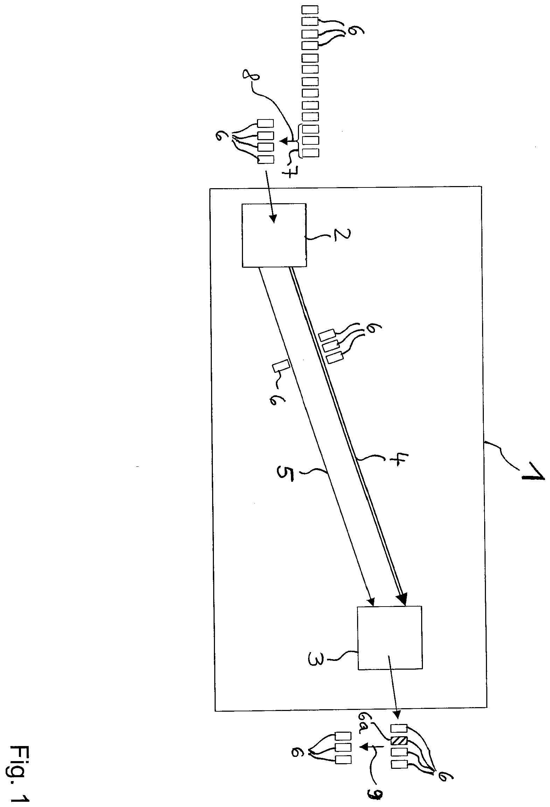

Die Erfindung wird nachfolgend anhand eines Ausführungsbeispiels unter Verwendung einer Zeichnung näher erläutert. Die Zeichnung Figur 1 zeigt eine Indoor-Datenübertragungseinrichtung und deren Betriebsweise in schematischer Darstellung.

In einem Gebäude oder Raum 1 befindet sich ein Sender 2 sowie ein Empfänger 3 in einem gewissen Abstand voneinander. Sowohl der Sender 2 als auch der Empfänger 3 können als Transceiver ausgebildet sein, das heißt mit jeweils einer integrierten Sendeeinheit und einer Empfangseinheit, so dass eine Datenübertragung in beiden Richtungen möglich ist. Der Einfachheit halber wird nachfolgend aber die Erfindung nur anhand einer Datenübertragungsrichtung erläutert, nämlich von dem Sender 2 zum Empfänger 3.

Durch die in dem Sender 2 und dem Empfänger 3 vorhandenen Sendeeinheiten und Empfangseinheiten wird ein erster Drahtlos-Datenübertragungskanal 4 und ein zweiter Drahtlos-Datenübertragungskanal 5 gebildet. Da es sich um eine drahtlose Datenübertragung handelt, sind solche Übertragungskanäle natürlich nicht physisch verkörpert, sondern werden technisch durch voneinander unterschiedliche Übertragungsfrequenzen, unterschiedliche Modulationsarten, unterschiedliche Kodierungsschemata oder andere Unterscheidungsmerkmale voneinander differenziert. Über jeden der Drahtlos-Datenübertragungskanäle 4, 5 können die Daten paketweise übertragen werden, das heißt in Form von Datenpaketen 6.

Die vom Sender 2 zum Empfänger 3 zu übertragenen Datenpakete sind links als fortlaufender Strom von Datenpaketen 6 dargestellt. Für Übertragungszwecke wird dieser Strom von Datenpaketen in Generationen von Datenpaketen eingeteilt. Dargestellt ist eine Generation 7, die im dargestellten Beispiel drei Datenpakete enthält, das heißt in diesem Fall ist K = 3. Über einen Kodierer 8 werden die Datenpakete der Generation 7 in eine höhere Zahl von Datenpaketen umkodiert, womit eine Redundanz vorgesehen wird. Im dargestellten Beispiel werden vier umkodierte Datenpakete 6 der Generation 7 erzeugt, das heißt es ist N = 4. Die umkodierten Datenpakete der Generation werden dann dem Sender 2 zur Übertragung zugeführt. Hierbei werden die Datenpakete 6 paketweise auf den ersten und den zweiten Datenübertragungskanal 4, 5 verteilt und dann übertragen. Dargestellt ist beispielhaft, dass über den ersten Drahtlos-Datenübertragungskanal 4 drei Datenpakete 6 übertragen werden und über den zweiten Drahtlos-Datenübertragungskanal 5 ein Datenpaket 6.

Im Empfänger 3 werden die Datenpakete von beiden Drahtlos-Datenübertragungskanälen 4, 5 empfangen und ausgewertet. Es sei angenommen, dass bei der Datenübertragung ein Datenpaket 6a verfälscht wird und damit fehlerhaft empfangen wird. Dieses verfälschte Datenpaket 6a wird verworfen. Aus den korrekt empfangenen Datenpaketen 6 werden über einen Decoder 9 die ursprünglichen drei Datenpakete der Generation 7 dekodiert.

Die Kodierung und Dekodierung der Datenpakete kann zum Beispiel wie folgt erfolgen (mit Bezug auf die Datenübertragung im Beispiel der Figur 1):
Die drei ursprünglichen Datenpakete 6 der Generation 7 seien x1, x2, x3.

Durch LNC-Kodierung werden hieraus umkodierte Datenpakete y1, y2, y3 und y4 wie folgt bestimmt:

$$y1 = a1 {*} x1 + b1 {*} x2 + c1 {*} x3$$

$$y2 = a2 {*} x1 + b2 {*} x2 + c2 {*} x3$$

$$y3 = a3 {*} x1 + b3 {*} x2 + c3 {*} x3$$

$$y4 = a4 {*} x1 + ab {*} x2 + c4 {*} x3$$

Auf der Empfängerseite kommen, wie zuvor erläutert, nur drei umkodierte Datenpakete fehlerfrei an, zum Beispiel y1, y3 und y4. Dementsprechend wird im Dekoder 9 das folgende lineare Gleichungssystem gelöst, zum Beispiel mit dem gausschen Eliminationsverfahren:

$$y1 = a1 {*} x1 + b1 {*} x2 + c1 {*} x3$$

$$y3 = a3 {*} x1 + b3 {*} x2 + c3 {*} x3$$

$$y4 = a4 {*} x1 + ab {*} x2 + c4 {*} x3$$

Im Ergebnis erhält man wieder die fehlerfreien ursprünglichen Datenpakete x1, x2 und x3.

**Patentansprüche**

1. Verfahren zur drahtlosen Indoor-Datenübertragung, wobei ein erster Drahtlos-Datenübertragungskanal (4) und ein zweiter Drahtlos-Datenübertragungskanal (5) zwischen einem Sender (2) und einem Empfänger (3) einer Datenübertragungseinrichtung verwendet wird,
wobei der erste Drahtlos-Datenübertragungskanal (4) ein Hochgeschwindigkeits-Datenübertragungskanal mit einer Übertragungsfrequenz im Terahertz-Frequenzbereich von 0,1 bis 10 Terahertz ist, der eine wesentlich höhere Datenübertragungsrate als der zweite Drahtlos-Datenübertragungskanal (5) aufweist, wobei der zweite Drahtlos-Datenübertragungskanal (5) eine Übertragungsfrequenz unterhalb des Terahertz-Frequenzbereichs aufweist, mit folgenden Schritten:

    a) vom Sender (2) zu übertragende Datenpakete (6) werden in Generationen (7) von Datenpaketen (6) eingeteilt, wobei eine Generation K Datenpakete (6) aufweist,
    b) die K Datenpakete (6) einer Generation (7) werden über eine Kodierung mit einer Redundanz versehen, indem sie in N Datenpakete (6) umkodiert werden, wobei N > K ist und N und K jeweils natürliche Zahlen sind,
    c) die N umkodierten Datenpakete (6) der Generation (7) werden vom Sender (2) zum Empfänger (3) übertragen, indem sie paketweise auf den ersten und den zweiten Drahtlos-Datenübertragungskanal (4,5) verteilt übertragen werden,
    d) aus den über den ersten und den zweiten Drahtlos-Datenübertragungskanal (4, 5) im Empfänger (3) korrekt empfangenen Datenpaketen (6) werden die ursprünglichen K Datenpakete (6) der Generation (7) dekodiert, wenn im Empfänger (3) wenigstens K umkodierte Datenpakete (6) der insgesamt N umkodierten Datenpakete (6) fehlerfrei empfangen wurden,

wobei der zweite Drahtlos-Datenübertragungskanal (5) zusätzlich für interne Steuer- und Kontrollfunktionen zwischen dem Sender (2) und dem Empfänger (3) genutzt wird, wobei hierzu Steuer- und/oder Kontroll-Daten über den zweiten Drahtlos-Datenübertragungskanal (5) übertragen werden.

2. Verfahren nach dem vorhergehenden Anspruch, wobei von den N umkodierten Datenpaketen (6) der Generation (7) eine kleinere Anzahl von Datenpaketen über den zweiten Drahtlos-Datenübertragungskanal (5) übertragen wird als über den ersten Drahtlos-Datenübertragungskanal (4).

3. Verfahren nach einem der vorhergehenden Ansprüche, wobei die Kodierung der K Datenpakete (6) der Generation (7) mittels einer linearen Netzwerkkodierung durchgeführt wird.

4. Verfahren nach einem der vorhergehenden Ansprüche, wobei die Dekodierung der korrekt empfangenen Datenpakete (6) zu den ursprünglichen K Datenpaketen (6) durch Lösen eines linearen Gleichungssystems durchgeführt wird.

5. Verfahren nach einem der vorhergehenden Ansprüche, wobei über den ersten Drahtlos-Datenübertragungskanal (4) von den N umkodierten Datenpaketen (6) der Generation (7) K Datenpakete (6) übertragen werden.

6. Verfahren nach einem der vorhergehenden Ansprüche, wobei die Übertragung der Datenpakete (6) der Generation (7) über den ersten Drahtlos-Datenübertragungskanal (4) abgeschlossen ist, bevor oder wenn die Datenübertragung der Datenpakete (6) dieser Generation (7) über den zweiten Drahtlos-Datenübertragungskanal (5) abgeschlossen ist.

7. Datenübertragungseinrichtung mit einem Sender (2) und einem Empfänger (3), zwischen denen ein erster Drahtlos-Datenübertragungskanal (4) und ein zweiter Drahtlos-Datenübertragungskanal (5) gebildet ist, über die Datenpakete (6) übertragbar sind, wobei die Datenübertragungseinrichtung zur Durchführung des Verfahrens nach einem der vorhergehenden Ansprüche eingerichtet ist.

8. Datenübertragungseinrichtung nach dem vorhergehenden Anspruch, wobei die Datenübertragungseinrichtung eine Kurzstrecken-Datenübertragungseinrichtung mit einer Reichweite von weniger als 100 Metern ist.

**Claims**

1. A method for wireless indoor data transmission, wherein a first wireless data transmission channel (4) and a second wireless data transmission channel (5) is used between a transmitter (2) and a receiver (3) of a data transmission device, wherein the first wireless data transmission channel (4) is a high-speed data transmission channel with a transmission frequency in the terahertz frequency range of 0,1 to 10 terahertz, which has a substantially higher data transmission rate than the second wireless data transmission channel (5), wherein the second wireless data transmission channel (5) has a transmission frequency below the terahertz frequency range, comprising the following steps

    a) data packets (6) to be transmitted by the transmitter (2) are divided into generations (7) of data packets (6), one generation comprising K data packets (6),

    b) the K data packets (6) of a generation (7) are provided with redundancy via coding by recoding them into N data packets (6), where N > K and N and K are each natural numbers,

    c) the N recoded data packets (6) of the generation (7) are transmitted from the transmitter (2) to the receiver (3) by transmitting them in packets distributed over the first and second wireless data transmission channels (4, 5),

    d) from the data packets (6) correctly received in the receiver (3) via the first and second wireless data transmission channels (4, 5), the original K data packets (6) of the generation (7) are decoded if at least K recoded data packets (6) of the total of N recoded data packets (6) have been received error-free in the receiver (3),

wherein the second wireless data transmission channel (5) is additionally used for internal control and monitoring functions between the transmitter (2) and the receiver (3), wherein for this purpose control and/or monitoring data are transmitted via the second wireless data transmission channel (5).

**2.** Method according to the preceding claim, wherein a smaller number of data packets of the N recoded data packets (6) of the generation (7) is transmitted via the second wireless data transmission channel (5) than via the first wireless data transmission channel (4).

**3.** Method according to one of the preceding claims, wherein the coding of the K data packets (6) of the generation (7) is performed by means of a linear network coding.

**4.** Method according to one of the preceding claims, wherein the decoding of the correctly received data packets (6) to the original K data packets (6) is performed by solving a linear system of equations.

**5.** Method according to one of the preceding claims, wherein K data packets (6) are transmitted over the first wireless data transmission channel (4) from the N recoded data packets (6) of the generation (7).

**6.** Method according to one of the preceding claims, wherein the transmission of the data packets (6) of the generation (7) via the first wireless data transmission channel (4) is completed before or when the data transmission of the data packets (6) of this generation (7) via the second wireless data transmission channel (5) is completed.

**7.** Data transmission device with a transmitter (2) and a receiver (3), between which a first wireless data transmission channel (4) and a second wireless data transmission channel (5) is formed, via which data packets (6) can be transmitted, the data transmission device being set up to carry out the method according to one of the preceding claims.

**8.** Data transmission equipment according to the preceding claim, wherein the data transmission equipment is a short-range data transmission equipment with a range of less than 100 meters.

**Revendications**

**1.** Procédé de transmission de données sans fil à l'intérieur (« Indoor »), dans lequel

un premier canal de transmission de données sans fil (4) et un second canal de transmission de données sans fil (5) sont utilisés entre un émetteur (2) et un récepteur (3) d'un dispositif de transmission de données,

le premier canal de transmission de données sans fil (4) est un canal de transmission de données à grande vitesse à une fréquence de transmission de données dans la plage de fréquence des térahertz allant de 0,1 à 10 térahertz, qui présente un débit de transmission de données sensiblement plus élevé que le second canal de transmission de données sans fil (5),

le second canal de transmission de données sans fil (5) présente une fréquence de transmission inférieure à la plage de fréquence des térahertz, comprenant les étapes suivantes :

    a) les paquets de données (6) à transmettre par l'émetteur (2) sont divisés en générations (7) de paquets de données (6), une génération comprenant K paquets de données (6),

    b) les K paquets de données (6) d'une génération (7) sont pourvus d'une redondance par un codage en étant recodés en N paquets de données (6), où N > K, et N et K sont des nombres naturels,

    c) les N paquets de données recodés (6) de la génération (7) sont transmis de l'émetteur (2) au récepteur (3) en étant transmis par paquets répartis sur le premier et sur le second canal de transmission de données sans fil (4, 5),

    d) à partir des paquets de données (6) correctement reçus dans le récepteur (3) via le premier et le second canal de transmission de données sans fil (4, 5), les K paquets de données originaux (6) de la génération (7) sont décodés lorsque dans le récepteur (3) au moins K paquets de données recodés (6) des paquets de données recodés (6) au total au nombre de N ont été reçus sans erreur,

et le second canal de transmission de données sans fil (5) est utilisé en plus pour des fonctions de commande et de contrôle internes entre l'émetteur (2) et le récepteur (3), des données de commande et/ou de contrôle étant transmises à cet effet via le second canal de transmission de données sans fil (5).

2. Procédé selon la revendication précédente, dans lequel
   parmi les N paquets de données recodés (6) de la génération (7), un nombre de paquets de données est transmis via le second canal de transmission de données sans fil (5), qui est plus petit que le nombre de paquets transmis via le premier canal de transmission de données sans fil (4).

3. Procédé selon l'une des revendications précédentes,
   **caractérisé en ce que** le codage des K paquets de données (6) de la génération (7) est effectué au moyen d'un codage de réseau linéaire (LNC).

4. Procédé selon l'une des revendications précédentes,
   **caractérisé en ce que** le décodage des paquets de données (6) correctement reçus en K paquets de données (6) originaux est effectué en résolvant un système linéaire d'équations.

5. Procédé selon l'une des revendications précédentes,
   **caractérisé en ce que** K paquets de données (6) parmi les N paquets de données recodés (6) de la génération (7) sont transmis via le premier canal de transmission de données sans fil (4).

6. Procédé selon l'une des revendications précédentes,
   **caractérisé en ce que** la transmission des paquets de données (6) de la génération (7) via le premier canal de transmission de données sans fil (4) est terminée avant ou lorsque la transmission des paquets de données (6) de cette génération (7) via le second canal de transmission de données sans fil (5) est terminée.

7. Dispositif de transmission de données comportant un émetteur (2) et un récepteur (3), entre lesquels sont réalisés un premier canal de transmission de données sans fil (4) et un second canal de transmission de données sans fil (5) qui permettent de transmettre des paquets de données (6), dans lequel le dispositif de transmission de données est conçu pour mettre en œuvre le procédé selon l'une des revendications précédentes.

8. Dispositif de transmission de données selon la revendication précédente, dans lequel le dispositif de transmission de données est un dispositif de transmission de données à courte distance ayant une portée inférieure à 100 mètres.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010018749 A1
- WO 0232020 A1
- US 20130201886 A1
- US 20030200499 A1